(19) Europäisches Patentamt / European Patent Office / Office européen des brevets

(11) **EP 4 084 165 B1**

(12) **EUROPEAN PATENT SPECIFICATION**

(45) Date of publication and mention of the grant of the patent:
**10.06.2026 Bulletin 2026/24**

(21) Application number: **20905648.0**

(22) Date of filing: **24.11.2020**

(51) International Patent Classification (IPC):
***H01M 8/04313*** *(2016.01)*

(52) Cooperative Patent Classification (CPC):
**H01M 8/04664; H01M 8/04313; H01M 8/0432; H01M 8/0438;** H01M 8/04328; H01M 8/04388; H01M 8/04619; Y02E 60/50

(86) International application number:
**PCT/CN2020/131001**

(87) International publication number:
**WO 2021/129274 (01.07.2021 Gazette 2021/26)**

(54) **FUEL CELL SYSTEM, METHOD AND APPARATUS FOR DETECTING TANK VALVE MALFUNCTION IN HYDROGEN SYSTEM THEREOF**

BRENNSTOFFZELLENSYSTEM, VERFAHREN UND VORRICHTUNG ZUM DETEKTIEREN EINER FEHLFUNKTION DES TANKENTLÜFTUNGSVENTILS IN EINEM WASSERSTOFFSYSTEM DAVON

SYSTÈME DE PILE À COMBUSTIBLE, PROCÉDÉ ET APPAREIL DE DÉTECTION DE DYSFONCTIONNEMENT DE SOUPAPE DE RÉSERVOIR DANS UN SYSTÈME D'HYDROGÈNE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2019 CN 201911358672**

(43) Date of publication of application:
**02.11.2022 Bulletin 2022/44**

(73) Proprietor: **Yutong Bus Co., Ltd.**
**Zhengzhou, Henan 450061 (CN)**

(72) Inventors:
• **LI, Jiangchuan**
**Zhengzhou, Henan 450061 (CN)**
• **ZHANG, Jinliang**
**Zhengzhou, Henan 450061 (CN)**
• **SI, Yaohui**
**Zhengzhou, Henan 450061 (CN)**
• **LI, Jin**
**Zhengzhou, Henan 450061 (CN)**
• **ZHANG, Longhai**
**Zhengzhou, Henan 450061 (CN)**

(74) Representative: **Gulde & Partner**
**Patent- und Rechtsanwaltskanzlei mbB**
**Berliner Freiheit 2**
**10785 Berlin (DE)**

(56) References cited:
CN-A- 105 552 410    CN-A- 107 275 660
CN-A- 107 464 945    CN-A- 108 177 527
CN-A- 108 916 653    US-A1- 2016 114 793

## Description

### TECHNICAL FIELD

The present invention belongs to the technical field of fuel cells, and in particular, relates to a fuel cell system and a method and apparatus for detecting a tank valve malfunction in a hydrogen system thereof.

### BACKGROUND

A fuel cell is an apparatus that directly transforms chemical energy of fuel into electrical energy, and can continuously output electrical energy when only fed with fuels and oxidants. The fuel cell has advantages such as a high energy transformation rate, cleanliness, and environmental protection. Fuel cell vehicles have become an important direction for development of new energy vehicles due to their advantages, such as high efficiency and zero emissions.

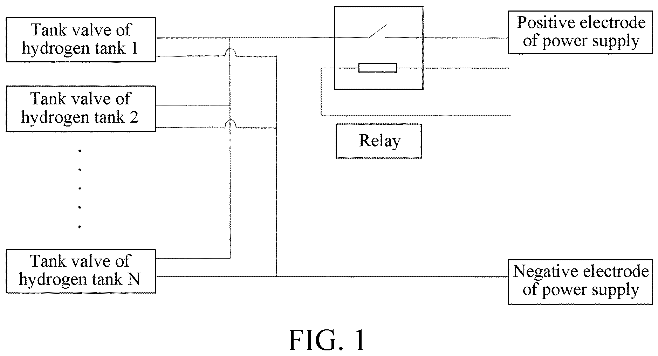

A fuel cell system usually uses hydrogen. At present, hydrogen is stored by using a high-pressure hydrogen tank. A tank valve is mounted to an end of the hydrogen tank, and a solenoid valve, a manual stop valve, a temperature sensor, and a pressure release device (PRD) are arranged inside the hydrogen tank. The solenoid valve is normally in a closed state and is configured to control supply of hydrogen. As shown in FIG. 1, a tank valve is mounted to an end of each hydrogen tank to control supply of hydrogen. All tank valves in a hydrogen system are powered by a same channel, and are opened and closed simultaneously according to a hydrogen demand of the fuel cell, which cannot be controlled separately. Therefore, the solution has the following problems: The solenoid valve in the tank valve has no switching feedback signal. If a tank valve malfunctions after power supply, the solenoid valve cannot be opened and the hydrogen tank cannot supply gas, but no malfunction prompt is provided. At the same time, since other hydrogen tanks can supply gas normally and do not affect normal operation of the fuel cell, it cannot be determined whether the tank valve malfunctions, thus affecting reliability of the hydrogen system and a mile range of the fuel cell vehicle. Therefore, it is necessary to detect whether the tank valve in the hydrogen system of a fuel cell system malfunctions.

For example, the Chinese patent application with Pub. No. CN108177527A discloses a method for detecting a hydrogen tank valve status in a fuel cell vehicle. In the method, a vehicle controller controls a fuel cell to continue operating during a time period before a vehicle stops or stops supplying hydrogen. Meanwhile, a tank valve of one hydrogen tank in the fuel cell is detected to determine whether the tank valve of the hydrogen tank malfunctions, and a pressure value of a high-pressure pipeline is restored to a value before determining after completion of the detection, thereby completing the detection of the tank valve of the hydrogen tank. When the vehicle controller sends an instruction to stop the vehicle or stop supplying hydrogen next time, other tank valves of the hydrogen system are detected cyclically in sequence to determine whether the tank valves malfunction. In this method, whether the tank valve malfunctions can be detected only after the vehicle controller sends an instruction to a hydrogen management system to stop the vehicle or stop supply of hydrogen. Therefore, whether the tank valve malfunctions cannot be detected in real time during the operation of the fuel cell, resulting in untimely detection. Moreover, in this method, detection channel by channel is required, that is, tank valves are required to be detected one by one. Therefore, each detection is required to wait for a next instruction when the vehicle controller sends to stop the vehicle or stop supply of hydrogen, resulting in a relatively long detection time and low efficiency.

US 2016/114793 A1 discloses a conventional fuel cell system and a method and apparatus for detecting a tank valve malfunction in a hydrogen system thereof.

### SUMMARY

The present invention provides a fuel cell system and a method and apparatus for detecting a tank valve malfunction in a hydrogen system thereof, to resolve a problem in the prior art that a tank valve malfunction cannot be detected in time and effectively.

The invention is defined by the appended set of claims. The description that follows is subjected to this limitation. Any disclosure lying outside the scope of said claims is only intended for illustrative as well as comparative purposes.

To resolve the foregoing technical problem, technical solutions of the present invention comprising:

the present invention provides a method for detecting a tank valve malfunction in a hydrogen system of a fuel cell system, including the following steps:

acquiring an actual hydrogen consumption rate during operation of a fuel cell system, and determining an actual hydrogen consumption within a set time; acquiring pressure values and temperature values of the hydrogen system at an initial moment and an end moment of the set time, and combining with a total water volume of the hydrogen system to determine a theoretical consumption for supply by the hydrogen system to a fuel cell; comparing the actual consumption with the theoretical consumption, and determining that a tank valve of the hydrogen system malfunctions if a difference between the theoretical consumption and the actual consumption is greater than a set value and no hydrogen leakage occurs in the hydrogen system. In order to accurately determine whether the tank valve malfunctions, the difference is a ratio of the theoretical consumption to the actual consumption, the corresponding set value is $n/(n-1)$, and $n$ is a number of hydrogen tanks in the hydrogen system.

Beneficial effects of the above technical solution are as follows: during operation of the fuel cell of the present invention, the theoretical consumption for supply by the hydrogen system to the fuel cell within the set time can be calculated based on an actual gas equation of state, and the actual hydrogen consumption within the set time can be calculated based on the actual hydrogen consumption rate during the operation of the fuel cell system, and the actual hydrogen consumption is compared with the theoretical consumption. In a case that a hydrogen leakage is ruled out, according to the difference between the actual hydrogen consumption and the theoretical consumption, it can be effectively determined in real time whether the tank valve malfunctions and causes the hydrogen tank to fail to supply gas. In this way, determining efficiency is high, safety and reliability of the hydrogen system are ensured, and safe and reliable operation of the fuel cell system is ensured. Moreover, in the present invention, it can be determined whether the tank valve malfunctions by using a temperature sensor, a pressure sensor, and a hydrogen leakage sensor existing on a fuel cell vehicle, so that costs are relatively low.

In an improvement of the method, in order to reduce a time for determining a malfunctioning tank valve, the method further includes a step of determining a number of malfunctioning tank valves according to the ratio and the number of the hydrogen tanks in the hydrogen system: determining that $x$ tank valves in the hydrogen system malfunction if

$$\frac{n}{n-x} \le K < \frac{n}{n-(x+1)}$$, where $1 \le x \le n-2$, $K$ is the ratio, and $n$ is the number of the hydrogen tanks in the hydrogen system.

In an improvement of the method, if the ratio $K$ is greater than or equal to the number $n$ of the hydrogen tanks in the hydrogen system, the number of the malfunctioning tank valves is determined according to the set time: it is determined that $n-1$ tank valves in the hydrogen system malfunction if the selected set time is greater than a set time threshold; and it is determined that $n$ tank valves in the hydrogen system malfunction if the selected set time is less than or equal to a set time threshold.

In an improvement of the method, in order to quickly and accurately obtain the actual hydrogen consumption rate, the actual hydrogen consumption rate is determined by detecting an actual operating power of the fuel cell, where each operating power corresponds to a corresponding hydrogen consumption rate.

In an improvement of the method, in order to improve accuracy of a temperature value of the hydrogen system, a temperature sensor is arranged on each tank valve to acquire a temperature of each tank valve, and an average value of the temperature values acquired by all of the temperature sensor is used as the temperature value of the hydrogen system.

In an improvement of the method, in order to eliminate impact of a malfunctioning temperature sensor to improve accuracy of malfunction detection, before the calculation of the temperature value of the hydrogen system, it is necessary to detect whether each temperature sensor malfunctions, and the temperature value acquired by the malfunctioning temperature sensor is no longer used for the calculation of the temperature value of the hydrogen system.

The present invention further provides an apparatus for detecting a tank valve malfunction in a hydrogen system of a fuel cell system. The apparatus includes a memory and a processor, where the processor is configured to execute instructions stored in the memory to implement the above method for detecting a tank valve malfunction in a hydrogen system of a fuel cell system and achieve a same effect as the above method for detecting a tank valve malfunction in a hydrogen system of a fuel cell system.

The present invention further provides a fuel cell system. The system includes a fuel cell, a hydrogen system, and a control apparatus, where the hydrogen system includes a temperature sensor, a pressure sensor, and a hydrogen leakage sensor, the temperature sensor is arranged at a tank valve of the hydrogen system and configured to detect a temperature value of the tank valve of the hydrogen system, the pressure sensor is arranged on a hydrogen supply pipeline between the hydrogen system and the fuel cell and configured to detect a pressure value of the hydrogen system, the hydrogen leakage sensor is configured to detect whether a hydrogen leakage occurs in the hydrogen system, and the control apparatus is connected to the temperature sensor, the pressure sensor, and the hydrogen leakage sensor for sampling, and is configured to implement the above method for detecting a tank valve malfunction in a hydrogen system of a fuel cell system and achieve a same effect as the above method for detecting a tank valve malfunction in a hydrogen system of a fuel cell system.

**BRIEF DESCRIPTION OF THE DRAWINGS**

FIG. 1 is a tank valve control diagram of a hydrogen system in the prior art.

FIG. 2 is a flowchart of a method for detecting a tank valve malfunction in a hydrogen system of a fuel cell system in an embodiment of a fuel cell system according to the present invention.

**DETAILED DESCRIPTION**

**Embodiment of fuel cell system**

This embodiment provides a fuel cell system, comprising a hydrogen system, a fuel cell (which is generally a fuel cell stack), a thermal management system, and the like, to realize transformation of chemical energy of a hydrogen fuel into electrical energy. The fuel cell system is applicable to a fuel cell vehicle to provide power required for a load of the whole vehicle.

The hydrogen system is an apparatus starting from a hydrogen filling port to a fuel cell inlet and related to hydrogen filling, storage, transport, supply, and control. The hydrogen system includes a hydrogen tank, a hydrogen filling port, a solenoid valve, a temperature sensor, a pressure sensor, a hydrogen leakage sensor, and a hydrogen system controller, and is configured to realize storage, processing, and transport of hydrogen. In this embodiment, only one pressure sensor is arranged. The pressure sensor is arranged on a hydrogen supply pipeline between the hydrogen system and the fuel cell, and is configured to detect a pressure value of the hydrogen system. A precision deviation of the pressure sensor is 0.3%fs. A temperature sensor is arranged at each tank valve to detect a temperature of each tank valve. The temperature sensor may be a negative temperature coefficient (NTC) thermistor. A precision deviation of the NTC thermistor is 2%fs. The hydrogen leakage sensor is generally a hydrogen concentration detection sensor, which may be arranged at a mouth of the hydrogen tank, a pressure reducing valve, or a hydrogen inlet of the fuel cell.

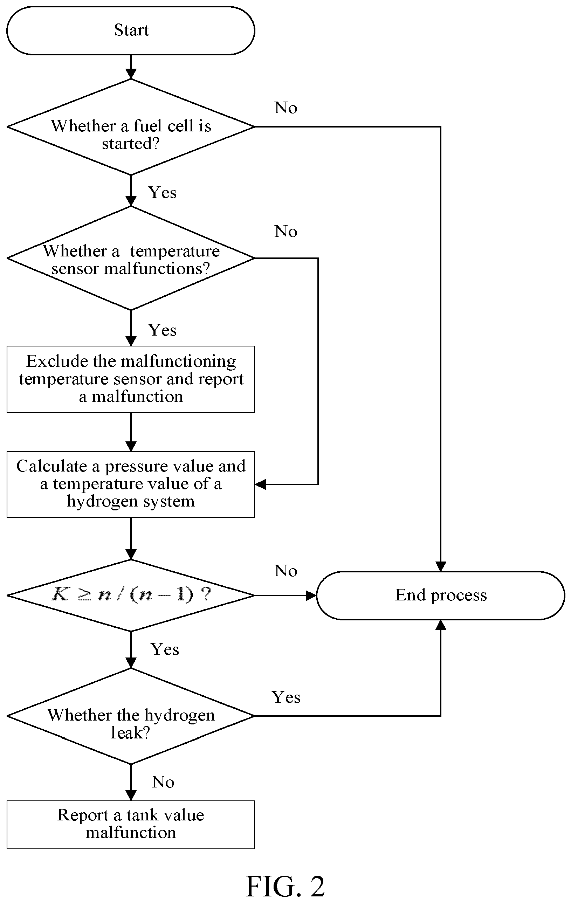

A method for detecting a tank valve malfunction in a hydrogen system of a fuel cell system can be implemented based on the fuel cell system with the above structure. The method is described in detail below with reference to FIG. 2.

In step I, it is determined whether the fuel cell is started, and subsequent real-time calculation of the present invention is performed only after the fuel cell is started, false report during venting and maintenance can be prevented at the same time.

In step II, it is determined whether a temperature value detected by the temperature sensor is abnormal, that is, whether the temperature sensor malfunctions. Since the sensor used is the NTC thermistor, in order to avoid impact of a failure of the single temperature sensor on the temperature value of the hydrogen system, it is determined whether the temperature sensor malfunctions depending on that a voltage across the thermistor exceeds a normal range when the temperature sensor is short-circuited or open-circuited. When one or more temperature sensors malfunctions, data acquired by the malfunctioning temperature sensors is eliminated, and calculation is performed on data acquired by the remaining normal temperature sensors according to a method in step III to obtain the temperature value of the hydrogen system.

In step III, in a case that the fuel cell is started, based on a slow temperature change of the hydrogen system within a short time, the hydrogen system controller acquires temperature values of each normal temperature sensor within an initial time period of a set time (an initial moment is $t_0$, and an ending moment is $t_1$) and temperature values within an ending time period, performs calculation on the temperature values within the initial time period by median average filtering method and using an obtained value as a temperature value of the temperature sensor at the moment $t_0$, and performs calculation on the temperature values within the ending time period by median average filtering method and using an obtained value is used as a temperature value of the temperature sensor at the moment $t_1$, thereby eliminating an acquisition deviation of the temperature sensor; and performs calculation on the temperature values of all the temperature sensors at the moment $t_0$ by median average filtering method and using an obtained value as a temperature value $T_0$ of the hydrogen system at the moment $t_0$, and performs calculation on the temperature values of all the temperature sensors at the moment $t_1$ by median average filtering method and using an obtained value as a temperature value $T_1$ of the hydrogen system at the moment $t_1$, thereby eliminating impact of an individual temperature sensor.

The median average filtering method is, for example, taking sample within $\Delta t$ for consecutive $N$ times, and then performing an arithmetic average on remaining $N - 2$ pieces of data with a maximum value and a minimum value being removed.

In step IV, the hydrogen system controller acquires a pressure value $P_0$ of the hydrogen system at the moment $t_0$ and a pressure value $P_1$ of the hydrogen system at the moment $t_1$ by using the pressure sensor. Based on a slow pressure change of the hydrogen system within a short time, calculation is performed on pressure values within the initial time period of the set time by median average filtering method, and a final obtained value is used as a pressure value $P_0$ of the hydrogen system at the moment $t_0$, thereby reducing impact of acquisition deviation of a pressure sensor signal. Likewise, calculation is performed on pressure **values** within the ending time period of the set time by median average filtering method, and a final obtained value is used as a pressure value $P_1$ of the hydrogen system at the moment $t_1$.

In step V, the hydrogen system controller calculates a theoretical consumption $m_{HMS}$ for supply by the hydrogen system to the fuel cell according to parameters such as the temperature value $T_0$ of the hydrogen system at the moment $t_0$,

the temperature value $T_1$ of the hydrogen system at the moment $t_1$, the pressure value $P_0$ of the hydrogen system at the moment $t_0$, the pressure value $P_1$ of the hydrogen system at the moment $t_1$, and a total water volume $V$ of the hydrogen system (namely, a nominal volume of the hydrogen system) by using an actual gas equation of state $PV = ZnRT$, where

$$m_{HMS} = M \times n = M \times (n_0 - n_1) = M \times \frac{V}{R}\left(\frac{P_0}{Z_0 \times T_0} - \frac{P_1}{Z_1 \times T_1}\right)$$

In the equation, $m_{HMS}$ is theoretical consumption; $M$ is a molar mass of hydrogen, which is $2.016 g / mol$; $n_0$ is an amount of hydrogen in the hydrogen system at the moment $t_0$, and $n_1$ is an amount of hydrogen in the hydrogen system at the moment $t_1$, both in a unit of $mol$; $R$ is a gas constant, which is $0.008314 MpagL/(molgK)$; $P_0$ and $P_1$ are respectively the pressure values of the hydrogen system at the moments $t_0$ and $t_1$ in a unit of $Mpa$; $T_0$ and $T_1$ are respectively the temperature values of the hydrogen system at the moments $t_0$ and $t_1$ in a unit of $K$; $Z_0$ is a hydrogen compression coefficient in case of $P_0$ and $T_0$, and $Z_1$ is a hydrogen compression coefficient in case of $P_1$ and $T_1$.

In step VI, since different power conditions of the fuel cell system correspond to different hydrogen consumption rates, the hydrogen system controller may obtain an actual hydrogen consumption rate $m_s$ of hydrogen consumed by the fuel cell system according to the corresponding relationship and an actual operating power of the fuel cell, thereby calculating an actual hydrogen consumption $m_{FC}$ within a time period $t_0 - t_1$ according to the following formula:

$$m_{FC} = \int_{t_0}^{t_1} m_s dt$$

In step VII, since the total water volume $V$ of the hydrogen system is used during the calculation of the theoretical consumption $m_{HMS}$, that is, all hydrogen tanks are taken into account, if the tank valve malfunctions and gas cannot be supplied, the theoretical consumption $m_{HMS}$ is significantly greater than the actual consumption $m_{FC}$. However, in case of a hydrogen leakage, the theoretical consumption $m_{HMS}$ is also greater than the actual consumption $m_{FC}$. Therefore, a difference between the actual consumption $m_{FC}$ and the theoretical consumption $m_{HMS}$ is first acquired, which is represented by a ratio $K$ of the theoretical consumption to the actual consumption, that is, $K = m_{HMS} / m_{FC}$. Then it is determined whether $K$ is greater than a set value, that is, whether $K \geq n / (n-1)$ is satisfied, where $n$ is a number of hydrogen tanks in the hydrogen system. If so, it is necessary to determine whether a hydrogen leakage occurs. If currently no hydrogen leakage occurs in the hydrogen system, it may be determined that some or all of the tank valves of the hydrogen system malfunction. The hydrogen leakage sensor is configured to detect whether hydrogen leaks.

In step VIII, after it is determined that the tank valves of the hydrogen system malfunction, a number of the malfunctioning tank valves may be further determined according to $K$ and the number of the hydrogen tanks in the hydrogen system:

it is determined that $x$ tank valves in the hydrogen system malfunction if $\dfrac{n}{n-x} \leq K < \dfrac{n}{n-(x+1)}$, where $1 \leq x \leq n - 2$;

it is determined that the number of the malfunctioning tank valves according to the set time if $n \leq K$;

it is determined that $n - 1$ tank valves in the hydrogen system malfunction if the selected set time is greater than a set time threshold (which may be 10s); and

it is determined that $n$ tank valves in the hydrogen system malfunction if the selected set time is less than or equal to a set time threshold.

After the number of the malfunctioning tank valves is determined, a time for determining can be shortened. For example, there are five hydrogen tanks in total and five tank valves are arranged correspondingly. If it is merely learned that tank valve malfunctions, it is necessary to detect the tank valves one by one to determine which tank valve or tank valves malfunction(s). When it is determined that two tank valves malfunction, it is possible that the two malfunctioning tank valves are already determined during inspection of a third tank valve. In this case, last two tank valves are not required to be inspected.

In this embodiment, the temperature values/pressure values of the hydrogen system at the initial moment and the ending moment of the set time, the actual hydrogen consumption, the theoretical hydrogen consumption, and whether the tank valve of the hydrogen system malfunctions are all calculated in the hydrogen system controller. In another embodiment, the calculation may be performed in a fuel cell controller. In addition, since the fuel cell controller and the hydrogen system controller can exchange data, a part of the calculation may be performed in the hydrogen system controller, and a remaining part may be performed in the fuel cell controller.

In this embodiment, in order to eliminate impact of the precision deviations of the pressure sensor and the temperature sensor, the temperature value and the pressure value of the hydrogen system are calculated by median average filtering method. In other implementations, the impact may be eliminated by other existing filtering methods.

In this embodiment, in order to determine whether the tank valve in the hydrogen system malfunctions, the difference between the actual consumption $m_{FC}$ and the theoretical consumption $m_{HMS}$ is represented by the ratio $K$ of the theoretical consumption to the actual consumption. In other implementations, the difference may be represented by a ratio of the actual consumption to the theoretical consumption, or directly by a difference value between the two, or even by a ratio of the difference value between the two to the actual consumption. Each representation manner corresponds to a different set value.

**Apparatus embodiment:**

This embodiment provides an apparatus for detecting a tank valve malfunction in a hydrogen system of a fuel cell system. The apparatus includes a memory and a processor, and the memory and the processor are directly or indirectly electrically connected to realize data transmission or exchange. The processor herein may be a general-purpose processor such as a central processing unit (CPU) or other programmable logic devices such as a digital signal processor (DSP). The processor may be a hydrogen system controller or a vehicle controller in a vehicle. The processor is configured to execute instructions stored in the memory to implement the method for detecting a tank valve malfunction in a hydrogen system of a fuel cell system described in the embodiment of the fuel cell system. Since the method has been described in detail in the embodiment of the fuel cell system, the details are not repeated herein.

**Method embodiment:**

This embodiment provides a method for detecting a tank valve malfunction in a hydrogen system of a fuel cell system. Since the method has been described in detail in the embodiment of the fuel cell system, the details are not repeated herein.

**Claims**

1. A method for detecting a tank valve malfunction in a hydrogen system of a fuel cell system, comprising the following steps:

    acquiring an actual hydrogen consumption rate during operation of the fuel cell system, and determining an actual hydrogen consumption within a set time;
    acquiring pressure values and temperature values of the hydrogen system at an initial moment and an end moment of the set time, and combining a total water volume of the hydrogen system to determine a theoretical consumption for supply by the hydrogen system to a fuel cell; and
    comparing the actual consumption with the theoretical consumption, and determining that the tank valve of the hydrogen system malfunctions if a difference between the theoretical consumption and the actual consumption is greater than a set value and no hydrogen leakage occurs in the hydrogen system, **characterized in that** the difference is a ratio of the theoretical consumption to the actual consumption, the corresponding set value is $n/(n-1)$, and $n$ is a number of hydrogen tanks in the hydrogen system.

2. The method for detecting a tank valve malfunction in a hydrogen system of a fuel cell system according to claim 1, **characterized in that** the method further comprises a step of determining a number of malfunctioning tank valves according to the ratio and the number of the hydrogen tanks in the hydrogen system: determining that x tank valves in the hydrogen system malfunction if $\dfrac{n}{n-x} \le K < \dfrac{n}{n-(x+1)}$ , wherein $1 \le x \le n-2$, $K$ is the ratio, and $n$ is the number of the hydrogen tanks in the hydrogen system.

3. The method for detecting a tank valve malfunction in a hydrogen system of a fuel cell system according to claim 1, **characterized in that** the number of the malfunctioning tank valves is determined according to the set time if the ratio $K$ is greater than or equal to the number $n$ of the hydrogen tanks in the hydrogen system: it is determined that $n-1$ tank valves in the hydrogen system malfunction if the selected set time is greater than a set time threshold; and it is determined that $n$ tank valves in the hydrogen system malfunction if the selected set time is less than or equal to a set time threshold.

4. The method for detecting a tank valve malfunction in a hydrogen system of a fuel cell system according to claim 1, **characterized in that** the actual hydrogen consumption rate is determined by detecting an actual operating power of the fuel cell, wherein each operating power corresponds to a corresponding hydrogen consumption rate.

5. The method for detecting a tank valve malfunction in a hydrogen system of a fuel cell system according to claim 1, **characterized in that** a temperature sensor is arranged on each tank valve to acquire a temperature of each tank valve, and an average value of the temperature values acquired by all of the temperature sensor is used as a temperature value of the hydrogen system.

6. The method for detecting a tank valve malfunction in a hydrogen system of a fuel cell system according to claim5, **characterized in that** before the calculation of the temperature value of the hydrogen system, it is necessary to detect whether each temperature sensor malfunctions, and the temperature value acquired by the malfunctioning temperature sensor is no longer used for the calculation of the temperature value of the hydrogen system.

7. An apparatus for detecting a tank valve malfunction in a hydrogen system of a fuel cell system, comprising a memory and a processor, **characterized in that** the processor is configured to execute instructions stored in the memory to implement the method for detecting a tank valve malfunction in a hydrogen system of a fuel cell system according to any of claims 1 to 6.

8. A fuel cell system, comprising a fuel cell, a hydrogen system, and a control apparatus, **characterized in that** the hydrogen system comprises a temperature sensor, a pressure sensor, and a hydrogen leakage sensor, the temperature sensor is arranged at a tank valve of the hydrogen system and configured to detect a temperature value of the tank valve of the hydrogen system, the pressure sensor is arranged on a hydrogen supply pipeline between the hydrogen system and the fuel cell and configured to detect a pressure value of the hydrogen system, the hydrogen leakage sensor is configured to detect whether a hydrogen leakage occurs in the hydrogen system, the control apparatus is connected to the temperature sensor, the pressure sensor, and the hydrogen leakage sensor for sampling, and the control apparatus comprises a memory and a processor, wherein the processor is configured to execute instructions stored in the memory to implement the method for detecting a tank valve malfunction in a hydrogen system of a fuel cell system according to any of claims 1 to 6.

**Patentansprüche**

1. Verfahren zum Detektieren einer Fehlfunktion des Tankentlüftungsventils in einem Wasserstoffsystem eines Brennstoffzellensystems, umfassend die folgenden Schritte:

Ermitteln einer tatsächlichen Wasserstoffverbrauchsrate während des Betriebs des Brennstoffzellensystems und Bestimmen eines tatsächlichen Wasserstoffverbrauchs innerhalb einer eingestellten Zeit;
Ermitteln von Druckwerten und Temperaturwerten des Wasserstoffsystems zu einem Anfangszeitpunkt und einem Endzeitpunkt der eingestellten Zeit, und Kombinieren eines Gesamtwasservolumens des Wasserstoffsystems, um einen theoretischen Verbrauch für die Versorgung einer Brennstoffzelle durch das Wasserstoffsystem zu bestimmen; und
Vergleichen des tatsächlichen Verbrauchs mit dem theoretischen Verbrauch und Feststellen, dass das Tankentlüftungsventil des Wasserstoffsystems fehlerhaft ist, wenn eine Differenz zwischen dem theoretischen Verbrauch und dem tatsächlichen Verbrauch größer als ein eingestellter Wert ist und kein Wasserstoffleck im Wasserstoffsystem auftritt, **dadurch gekennzeichnet, dass** die Differenz ein Verhältnis des theoretischen Verbrauchs zum tatsächlichen Verbrauch ist, der entsprechende eingestellte Wert $n / (n-1)$ ist und $n$ eine Anzahl von Wasserstofftanks im Wasserstoffsystem ist.

2. Verfahren zum Detektieren einer Fehlfunktion des Tankentlüftungsventils in einem Wasserstoffsystem eines Brennstoffzellensystems nach Anspruch 1, **dadurch gekennzeichnet, dass** das Verfahren ferner einen Schritt zum Bestimmen einer Anzahl fehlerhafter Tankentlüftungsventile entsprechend dem Verhältnis und der Anzahl der Wasserstofftanks im Wasserstoffsystem umfasst: Feststellen, dass $x$ Tankentlüftungsventile im Wasserstoffsystem

fehlerhaft sind, wenn $\dfrac{n}{n-x} \leq K < \dfrac{n}{n-(x+1)}$ , wobei $1 \leq x \leq n$ - 2, *K* das Verhältnis ist und *n* die Anzahl der Wasserstofftanks im Wasserstoffsystem ist.

3. Verfahren zum Detektieren einer Fehlfunktion des Tankentlüftungsventils in einem Wasserstoffsystem eines Brennstoffzellensystems nach Anspruch 1, **dadurch gekennzeichnet, dass** die Anzahl der fehlerhaften Tankentlüftungsventile entsprechend der eingestellten Zeit bestimmt wird, wenn das Verhältnis *K* größer oder gleich der Anzahl *n* der Wasserstofftanks im Wasserstoffsystem ist: es wird festgestellt, dass *n* -1 Tankentlüftungsventile im Wasserstoffsystem fehlerhaft sind, wenn die ausgewählte eingestellte Zeit größer als ein Schwellenwert für eingestellte Zeit ist; und es wird festgestellt, dass *n* Tankentlüftungsventile im Wasserstoffsystem fehlerhaft sind, wenn die ausgewählte eingestellte Zeit kleiner oder gleich einem Schwellenwert für eingestellte Zeit ist.

4. Verfahren zum Detektieren einer Fehlfunktion des Tankentlüftungsventils in einem Wasserstoffsystem eines Brennstoffzellensystems nach Anspruch 1, **dadurch gekennzeichnet, dass** die tatsächliche Wasserstoffverbrauchsrate durch Erfassen einer tatsächlichen Betriebsleistung der Brennstoffzelle bestimmt wird, wobei jede Betriebsleistung einer entsprechenden Wasserstoffverbrauchsrate entspricht.

5. Verfahren zum Detektieren einer Fehlfunktion des Tankentlüftungsventils in einem Wasserstoffsystem eines Brennstoffzellensystems nach Anspruch 1, **dadurch gekennzeichnet, dass** an jedem Tankentlüftungsventil ein Temperatursensor angeordnet ist, um eine Temperatur jedes Tankentlüftungsventils zu ermitteln, wobei ein Durchschnittswert der von allen Temperatursensoren ermittelten Temperaturwerte als Temperaturwert des Wasserstoffsystems verwendet wird.

6. Verfahren zum Detektieren einer Fehlfunktion des Tankentlüftungsventils in einem Wasserstoffsystem eines Brennstoffzellensystems nach Anspruch 5, **dadurch gekennzeichnet, dass** vor der Berechnung des Temperaturwerts des Wasserstoffsystems erfasst werden muss, ob jeder Temperatursensor fehlerhaft ist, und der von dem fehlerhaften Temperatursensor ermittelte Temperaturwert nicht mehr für die Berechnung des Temperaturwerts des Wasserstoffsystems verwendet wird.

7. Vorrichtung zum Detektieren einer Fehlfunktion des Tankentlüftungsventils in einem Wasserstoffsystem eines Brennstoffzellensystems, umfassend einen Speicher und einen Prozessor, **dadurch gekennzeichnet, dass** der Prozessor dazu konfiguriert ist, im Speicher gespeicherte Befehle auszuführen, um das Verfahren zum Detektieren einer Fehlfunktion des Tankentlüftungsventils in einem Wasserstoffsystem eines Brennstoffzellensystems nach einem der Ansprüche 1 bis 6 zu implementieren.

8. Brennstoffzellensystem, umfassend eine Brennstoffzelle, ein Wasserstoffsystem und eine Steuervorrichtung, **dadurch gekennzeichnet, dass** das Wasserstoffsystem einen Temperatursensor, einen Drucksensor und einen Wasserstofflecksensor umfasst, wobei der Temperatursensor an einem Tankentlüftungsventil des Wasserstoffsystems angeordnet und dazu konfiguriert ist, einen Temperaturwert des Tankentlüftungsventils des Wasserstoffsystems zu erfassen, der Drucksensor an einer Wasserstoffzufuhrleitung zwischen dem Wasserstoffsystem und der Brennstoffzelle angeordnet und dazu konfiguriert ist, einen Druckwert des Wasserstoffsystems zu erfassen, der Wasserstofflecksensor dazu konfiguriert ist, zu erfassen, ob im Wasserstoffsystem ein Wasserstoffleck auftritt, die Steuervorrichtung zur Abtastung mit dem Temperatursensor, dem Drucksensor und dem Wasserstofflecksensor verbunden ist, und die Steuervorrichtung einen Speicher und einen Prozessor umfasst, wobei der Prozessor dazu konfiguriert ist, im Speicher gespeicherte Befehle auszuführen, um das Verfahren zum Detektieren einer Fehlfunktion des Tankentlüftungsventils in einem Wasserstoffsystem eines Brennstoffzellensystems nach einem der Ansprüche 1 bis 6 zu implementieren.

**Revendications**

1. Procédé de détection d'un dysfonctionnement de soupape de réservoir dans un système hydrogène d'un système de pile à combustible, comprenant les étapes suivantes :

   acquérir un taux réel de consommation d'hydrogène pendant le fonctionnement du système de pile à combustible, et déterminer une consommation réelle d'hydrogène pendant un temps défini ;
   acquérir des valeurs de pression et des valeurs de température du système hydrogène à un instant initial et à un instant final du temps défini, et combiner un volume total d'eau du système hydrogène pour déterminer une consommation théorique pour l'alimentation du système hydrogène vers une pile à combustible ; et comparer la consommation réelle avec la consommation théorique, et déterminer que la soupape de réservoir du système hydrogène présente un dysfonctionnement si une différence entre la consommation théorique et la consommation réelle est supérieure à une valeur définie et qu'aucune fuite d'hydrogène ne se produit dans le système hydrogène, **caractérisé en ce que** la différence est un rapport de la consommation théorique à la consommation réelle, la valeur définie correspondante est $n/(n-1)$, et $n$ est un nombre de réservoirs d'hydrogène dans le système hydrogène.

2. Procédé de détection d'un dysfonctionnement de soupape de réservoir dans un système hydrogène d'un système de pile à combustible selon la revendication 1, **caractérisé en ce que** le procédé comprend en outre une étape consistant à déterminer un nombre de soupapes de réservoir défaillantes selon le rapport et le nombre de réservoirs d'hydrogène dans le système hydrogène : déterminer que $x$ soupapes de réservoir dans le système hydrogène présentent un dysfonctionnement si $\dfrac{n}{n-x} \le K < \dfrac{n}{n-(x+1)}$, dans lequel $1 \le x \le n-2$, $K$ est le rapport, et $n$ est le nombre de réservoirs d'hydrogène dans le système hydrogène.

3. Procédé de détection d'un dysfonctionnement de soupape de réservoir dans un système hydrogène d'un système de pile à combustible selon la revendication 1, **caractérisé en ce que** le nombre de soupapes de réservoir défaillantes est déterminé selon le temps défini si le rapport $K$ est supérieur ou égal au nombre $n$ de réservoirs d'hydrogène dans le système hydrogène : il est déterminé que $n-1$ soupapes de réservoir dans le système hydrogène présentent un dysfonctionnement si le temps défini sélectionné est supérieur à un seuil de temps défini ; et il est déterminé que $n$ soupapes de réservoir dans le système hydrogène présentent un dysfonctionnement si le temps défini sélectionné est inférieur ou égal au seuil de temps défini.

4. Procédé de détection d'un dysfonctionnement de soupape de réservoir dans un système hydrogène d'un système de pile à combustible selon la revendication 1, **caractérisé en ce que** le taux réel de consommation d'hydrogène est déterminé en détectant une puissance de fonctionnement réelle de la pile à combustible, dans lequel chaque puissance de fonctionnement correspond à un taux de consommation d'hydrogène correspondant.

5. Procédé de détection d'un dysfonctionnement de soupape de réservoir dans un système hydrogène d'un système de pile à combustible selon la revendication 1, **caractérisé en ce qu'**un capteur de température est disposé sur chaque soupape de réservoir pour acquérir une température de chaque soupape de réservoir, et une valeur moyenne des valeurs de température acquises par l'ensemble des capteurs de température est utilisée comme valeur de température du système hydrogène.

6. Procédé de détection d'un dysfonctionnement de soupape de réservoir dans un système hydrogène d'un système de pile à combustible selon la revendication 5, **caractérisé en ce que**, avant le calcul de la valeur de température du système hydrogène, il est nécessaire de détecter si chaque capteur de température présente un dysfonctionnement, et la valeur de température acquise par le capteur de température défaillant n'est plus utilisée pour le calcul de la valeur de température du système hydrogène.

7. Appareil de détection d'un dysfonctionnement de soupape de réservoir dans un système hydrogène d'un système de pile à combustible, comprenant une mémoire et un processeur, **caractérisé en ce que** le processeur est configuré pour exécuter des instructions stockées dans la mémoire afin de mettre en œuvre le procédé de détection d'un dysfonctionnement de soupape de réservoir dans un système hydrogène d'un système de pile à combustible selon l'une quelconque des revendications 1 à 6.

8. Système de pile à combustible, comprenant une pile à combustible, un système hydrogène, et un appareil de commande, **caractérisé en ce que** le système hydrogène comprend un capteur de température, un capteur de pression, et un capteur de fuite d'hydrogène, le capteur de température est disposé au niveau d'une soupape de réservoir du système hydrogène et est configuré pour détecter une valeur de température de la soupape de réservoir du système hydrogène, le capteur de pression est disposé sur une conduite d'alimentation en hydrogène entre le système hydrogène et la pile à combustible et est configuré pour détecter une valeur de pression du système hydrogène, le capteur de fuite d'hydrogène est configuré pour détecter si une fuite d'hydrogène se produit dans le système hydrogène, l'appareil de commande est relié au capteur de température, au capteur de pression et au capteur de fuite d'hydrogène pour un échantillonnage, et l'appareil de commande comprend une mémoire et un processeur, dans lequel le processeur est configuré pour exécuter des instructions stockées dans la mémoire afin de mettre en œuvre le procédé de détection d'un dysfonctionnement de soupape de réservoir dans un système hydrogène d'un système de pile à combustible selon l'une quelconque des revendications 1 à 6.

| Tank valve of hydrogen tank 1 | | Positive electrode of power supply |
|---|---|---|

| Tank valve of hydrogen tank 2 | |
|---|---|

.
.
.
.
.

| Tank valve of hydrogen tank N | | Negative electrode of power supply |
|---|---|---|

Relay

## FIG. 1

```
                    ┌─────────────────────────┐
                    │          Start          │
                    └─────────────────────────┘
                                 │
                                 ▼
                          ╱─────────────╲                    No
                         ╱  Whether a     ╲ ──────────────────────────────────┐
                         ╲ fuel cell is   ╱                                    │
                          ╲  started?    ╱                                     │
                           ╲────────────╱                                      │
                                 │ Yes                                         │
                                 ▼                                             │
                          ╱─────────────╲          No                          │
                         ╱ Whether a     ╲ ───────────────┐                    │
                         ╲ temperature    ╱               │                    │
                          ╲sensor         ╱               │                    │
                          ╲malfunctions? ╱                │                    │
                           ╲────────────╱                 │                    │
                                 │ Yes                    │                    │
                                 ▼                        │                    │
                    ┌─────────────────────────┐           │                    │
                    │ Exclude the malfunctioning│          │                    │
                    │ temperature sensor and    │          │                    │
                    │ report a malfunction      │          │                    │
                    └─────────────────────────┘           │                    │
                                 │                         │                    │
                                 ▼                         │                    │
                    ┌─────────────────────────┐            │                    │
                    │ Calculate a pressure     │◄───────────┘                    │
                    │ value and a temperature  │                                │
                    │ value of a hydrogen system│                               │
                    └─────────────────────────┘                                │
                                 │                                             │
                                 ▼                                             ▼
                          ╱─────────────╲          No           ┌──────────────────────┐
                         ╱ K ≥ n/(n-1) ? ╲ ──────────────────► │     End process      │
                         ╲              ╱                       └──────────────────────┘
                           ╲────────────╱                                      ▲
                                 │ Yes                                         │
                                 ▼                                             │
                          ╱─────────────╲          Yes                         │
                         ╱ Whether the   ╲ ────────────────────────────────────┘
                         ╲ hydrogen leak? ╱
                           ╲────────────╱
                                 │ No
                                 ▼
                    ┌─────────────────────────┐
                    │ Report a tank value      │
                    │ malfunction              │
                    └─────────────────────────┘
```

$$K \geq n / (n - 1) \ ?$$

FIG. 2

**EP 4 084 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108177527 A
- US 2016114793 A1